(19) Europäisches Patentamt
European Patent Office
Office européen des brevets

(11) Veröffentlichungsnummer: **0 000 044**
**B1**

(12) # EUROPÄISCHE PATENTSCHRIFT

(21) Anmeldenummer: **78100073.2**

(22) Anmeldetag: **01.06.78**

(51) Int. Cl.³: **C 07 F 9/32, D 06 M 13/28**

(54) **Carbamoyloxyalkylphosphinsäurederivate und Verfahren zu ihrer Herstellung sowie ihre Verwendung zur Herstellung flammhemmender Ausrüstungen**

(30) Priorität: **10.06.77 CH 7192 77**

(43) Veröffentlichungstag der Anmeldung:
**20.12.78 Patentblatt 78 01**

(45) Bekanntmachung des Hinweises auf die Patenterteilung:
**23.07.80 Patentblatt 80 15**

(84) Benannte Vertragsstaaten:
**BE CH DE FR GB NL**

(56) Entgegenhaltungen:
**DE - A - 1 946 574**
**FR - A - 2 046 777**
**FR - A - 2 202 100**
**US - 3 758 554**

(73) Patentinhaber: **Hoechst Aktiengesellschaft**
**Postfach 80 03 20**
**D-6230 Frankfurt/Main 80**
**(DE)**

(72) Erfinder: **Kleiner, Hans-Jerg, Dr.**
**Altkönigstrasse 11a**
**D-6242 Kronberg**
**Taunus (DE)**
**Linke, Fritz, Dr.**
**Im Flemetz 8**
**D-6240 Königstein**
**Taunus (DE)**
**Dürsch, Walter, Dr.**
**In der Braubach 4**
**D-6240 Königstein**
**Taunus (DE)**

**EP 0 000 044 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Carbamoyloxyalkylphosphinsäurederivate und Verfahren zu ihrer Herstellung sowie ihre Verwendung zur Herstellung flammhemmender Ausrüstungen

Gegenstand der Erfindung sind Carbamoyloxyalkylphosphinsäurederivate oder ihre Gemische der Formel 1

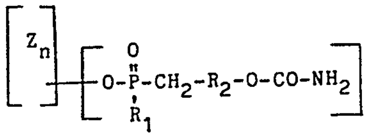

I

in der $Z_n$ einen n-wertigen paraffinischen gesättigten Kohlenwasserstoffrest mit 1 bis 6 Kohlenstoffatomen, $R_1$ eine gegebenenfalls verzweigte Alkylgruppe mit 1 bis 6 Kohlenstoffatomen, die durch ein Halogenatom, vorzugsweise Cl, substituiert sein kann, oder einen Phenylrest, $R_2$ eine gegebenenfalls verzweigte Alkylengruppe mit 2 bis 7 Kohlenstoffatomen bedeutet, n = 1 bis 4 ist.

Aus der FR—A 2 202 100 sind bereits Phosphinsäurederivate als Flammhemmittel bekannt, die eine Carbamoyloxyalkylester-Gruppe enthalten. Derartige Verbindungen mit einer Carbamoyloxyalkylester-Gruppe sind aber sehr hydrolyseempfindlich. Die DE—A 19 46 574 beschreibt Carbamoylalkyl-phosphinsäurealkylester. Diese Verbindungen zeigen jedoch im Unterschied zu den nachfolgend beschriebenen Verbindungen bei der flammhemmenden Ausrüstung von Florteppichen eine ungenügende Permanenz und nur einen mäßigen Flammhemmeffekt.

Die erfindungsgemässen Verbindungen lassen sich in guten Ausbeuten aus Phosphoniten der Formel II

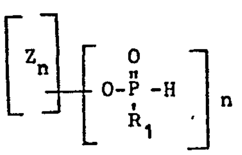

II

worin Z, $R_1$, n die oben angegebenen Bedeutungen haben, dadurch herstellen, dass die Phosphonite der Formel II in Gegenwart von Radikalbildnern umgesetzt werden mit olefinisch ungesättigten Carbamaten der Formel III

$$CH_2 = R_3—O—CO—NH_2 \qquad III$$

worin $R_3$ einen gegebenenfalls verzweigten Alkenylrest mit 2 bis 7 Kohlenstoffatomen bedeutet und identisch ist mit dem um ein H-Atom ärmeren Rest $R_2$.

Die Phosphonite der Formel II sind im Falle n = 1 bekannte Verbindungen. So können z.B. eingesetzt werden: Methanphosphonigsäuremonomethylester, Methanphosphonigsäuremonoäthylester, Methanphosphonigsäuremonoisopropylester, Methanphosphonigsäuremonoisobutylester, Äthanphosphonigsäuremonobutylester, Chlormethylphosphonigsäureisobutylester, Phenylphosphonigsäureisobutylester.

Die Carbamate der Formel III sind bekannte Verbindungen. Beispielsweise kommen in Frage: Allylcarbamat, Methyllylcarbamat, 2-Methylbuten-(1)-ylcarbamat, Buten-(1)-yl-carbamat, n-Hexen-(1)-ylcarbamat. Besonders bevorzugt ist Allylcarbamat.

Als Radikalbildner kommen beliebige Radikalbildner in Frage. Besonders bevorzugt kommen die üblichen organischen Peroxide in Frage. Im einzelnen seien z.B. genannt: Di-tert.-butyl-peroxid, tert.-Butylperoxybenzoat, 2,5-Dimethyl-bis-2,5-(peroxybenzoat), tert.-Butylhydroperoxid, Dicumylperoxid, Benzoylperoxid. Besonders bevorzugt ist Di-tert.-butylperoxid. Der Radikalbildner wird zwechmässig in einer Menge von 0,5 bis 5 Gew.-%, vorzugsweise 1 bis 2 Gew.-%, bezogen auf die Gewichtsmenge des eingesetzten Carbamats, eingesetzt.

Der Zusatz von inerten Lösungsmitteln kann zweckmässig sein. Als derartige Lösungsmittel kommen z.B. in Frage: Alkohole wie z. B. Butanol, Hexanol, Äther, aromatische Kohlenwasserstoffe wie z.B. Xylol. Im allgemeinen wird ohne Lösungsmittel gearbeitet.

Das Verfahren kann vorteilhaft unter Inertgasatmosphäre durchgeführt werden. Als Inertgase kommen z.B. in Frage Argon oder Stickstoff.

Die Umsetzung erfolgt im Temperaturbereich 100°—220°C. Besonders bevorzugt wird die Umsetzung bei 130°—180°C durchgeführt.

Die Umsetzung wird zweckmässig derart durchgeführt, dass die Phosphonite der Formel II auf die gewünschte Reaktionstemperatur erhitzt werden und dann die Carbamate der Formel III, vermischt mit dem Radikalbildner, zudosiert werden. Die Umsetzung ist nach 2 bis 6 Stunden beendet. Der Umsatz ist etwa quantitativ. Die Ausgangsstoffe können auch nach anderen allgemein bekannten Methoden zur Umsetzung gebracht werden, jedoch ist die beschriebene Verfahrensmethodik bevorzugt. Das Verfahren kann insbesondere auch kontinuierlich durchgeführt werden.

Nach beendeter Umsetzung wird (im Falle eines Einsatzes) das Lösungsmittel unter vermindertem Druck abdestilliert. Werden keine Lösungsmittel verwendet, so können ebenfalls durch Andestillieren unter vermindertem Druck leichtflüchtige Anteile abdestilliert werden. Die als Destillationsrückstand verbleibenden Verfahrensprodukte sind für den Einsatz in der Technik genügend rein. Häufig können die Umsetzungsprodukte ohne besondere Reinigungsmassnahmen direkt eingesetzt werden.

Die Stoffe der Formel I können mit sehr gutem Erfolg als Mittel zur Flammhemmung bzw. zur Herstellung von flammhemmenden Mitteln verwendet werden.

So lassen sich die Verbindungen mit Formaldehyd in die entsprechenden N-Methylolverbindungen überführen, die dann nach Verfahren, wie sie bei Methylolverbindungen üblich sind, auf Textilmaterial appliziert und dort vernetzt werden oder, wie bei Baumwolle, direkt mit der Faser reagieren.

Beispiel 1

108 g Methanphosphonigsäuremonoäthylester werden unter Rühren und unter Stickstoffatmosphäre auf 150°C erhitzt. Nun wird während 2,5 Stunden ein Gemisch von 101 g Allyl-carbamat und 1 g Di-tert.-butylperoxid eingetropft. Es wird 1 Stunde bei dieser Temperatur nachgerührt. Anschliessend wird gekühlt und bei 0,2 Torr bis zu einer Innentemperatur von 140°C andestilliert. Es destillieren 9 g ab. Als Rückstand verbleiben ca. 205 g 3-Carbamoyloxypropylmethylphosphinsäureäthylester, $n_D^{21}$: 1,4765. Das entspricht einer Ausbeute von ca. 95% d. Th.

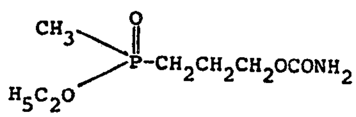

Beispiel 2

136 g Methanphosphonigsäuremono-n-butylester werden unter Rühren und in einer Inertgasatmosphäre auf 150°C erhitzt. Nun wird während 2 Stunden ein Gemisch von 101 g Allylcarbamat und 1 g Di-tert.-butylperoxid eingetropft. Dann wird 1 Stunde bei dieser Temperatur nachgerührt. Anschliessend wird gekühlt. Bis zu einer Innentemperatur von 120°C wird bei 0,5 Torr der Versuch einer Andestillation unternommen. Es wird kein Destillat erhalten. Es verbleiben 237 g 3-Carbamoyloxypropylmethylphosphinsäure-n-butylester, Fp. 56°—57°C. Das Produkt kann bei 0,6 Torr und 220°C im Dünnschichtverdampfer destilliert werden.

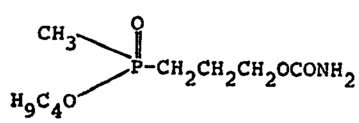

Beispiel 3

100 g Methanphosphonigsäuremono-n-butylester werden unter Rühren und unter einer Stickstoffatmosphäre auf 140°C erhitzt. Nun wird während 2 Stunden ein Gemisch von 85 g Methallylcarbamat und 3,7 g tert.-Butylperbenzoat eingetropft. Dann wird 1 Stunde bei 135°C nachgerührt. Anschliessend wird bei 0,8 Torr bis zu einer Innentemperatur von 140°C andestilliert. Es destillieren ca. 5 g ab. Es verbleiben 180 g (3-Carbamoyloxy-2-methyl-propyl)-methylphosphinsäure-n-butylester, $n_D^{23}$: 1,4725. Das entspricht einer Ausbeute von ca. 95% d. Th.

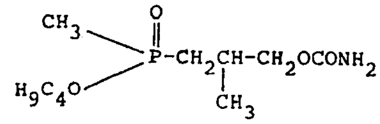

Beispiel 4

70 g Methanphosphonigsäuremonoisobutylester werden unter Rühren und unter einer Inertgasatmosphäre auf 150°C erhitzt. Nun wird während 2 Stunden ein Gemisch von 66,5 g 2-Methylbuten-(1)-yl-4-carbamat und 1,2 g Di-tert.-butylperoxid eingetropft. Es wird 1 Stunde bei 150°C nachgerührt. Anschliessend wird gekühlt. Dann wird bis zu einer Innentemperatur von 150°C bei 0,5 Torr andestilliert. Es destillieren 1 g ab. Es verbleiben 136 g (4-Carbamoyloxy-2-methylbutyl)-methylphosphinsäureisobutylester, $n_D^{23}$: 1,4720. Das entspricht einer Ausbeute von mehr als 95% d. Th.

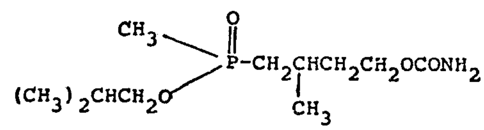

Beispiel 5

a) Umesterungsprodukt von Methanphosphonigsäuremonoisobutylester mit Hexandiol-1,6 im Molverhältnis 2:1

408 g Methanphosphonigsäuremonoisobutylester, 177 g Hexandiol-1,6 und 6 g Soda werden im Wasserstrahlvakuum bei 100 bis 20 Torr 3 Stunden auf 100°—120°C erhitzt. Dabei destillieren über eine Kolonne 220 g Isobutanol ab. Der Rückstand wird abgesaugt. Man erhält 360 g einer farblosen Flüssigleit, $n_D^{20}$: 1,4649. Die Ausbeute beträgt mehr als 95% d. Th.

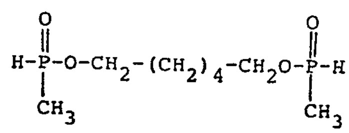

b) Anlagerungsprodukt von Allylcarbamat an das Produkt von Beispiel 5a)

360 g Umesterungsproduktes des Beispiels 5a) werden unter Rühren und unter einer Stickstoffatmosphäre auf 150°C erhitzt. Nun wird während 3,5 Stunden ein Gemisch von 283 g Allylcarbamat und 5 g Di-tert.-butylperoxid eingetropft. Anschliessend wird 1 Stunde bei 150°C nachgerührt. Dann wird gekühlt und bis zu einer Innentemperatur von 140°C bei 1 Torr andestilliert. Es destillieren ca. 5 g ab. Man

erhält ca. 630 g eines 3-Carbamoyloxypropyl-methylphosphinsäureesters, $n_D^{21}$: 1,4930. Das entspricht einer Ausbeute von mehr als 95% d. Th.

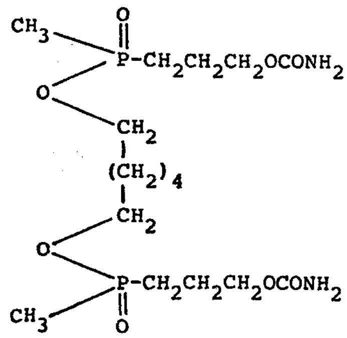

Beispiel 6

a) Umesterungsprodukt von Methanphosphonigsäuremonoisobutylester mit Pantaerythrit im Molverhältnis 4:1

272 g Methanphosphonigsäuremonoisobutylester, 68 g Pentaerythrit und 3 g Soda werden im Wasserstrahlvakuum bei 80 bis 30 Torr 5 Stunden auf 80° bis 130°C erhitzt. Über eine Kolonne destillieren dabei 146 g Isobutanol ab. Der Rückstand wird abgesaugt. Es resultieren 190 g einesfarblosen Öls, $n_D^{20}$: 1,4926. Die Ausbeute beträgt ca. 95% d. Th.

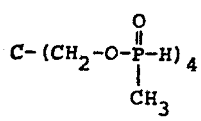

b) Anlagerungsprodukt von Allylcarbamat an das Produkt von Beispiel 6a)

184 g des Umesterungsproduktes des Beispiels 6a) werden unter Rühren und einer Stickstoffatmosphäre auf 150°C erhitzt. Nun wird während 2 Stunden ein Gemisch von 188 g Allylcarbamat und 2 g Di-tert.-butylperoxid eingetropft. Anschliessend wird 1 Stunde bei 150°C nachgerührt. Dann wird andestilliert bis zu einer Innentemperatur von 150°C bei 1 Torr. Es destillieren ca. 5 g ab. Man erhält ca. 265 g eines 3-Carbamoyloxypropylmethylphosphinsäureesters, Erstarrungspunkt ca. 45°C. Das entspricht einer Ausbeute von über 95% d. Th.

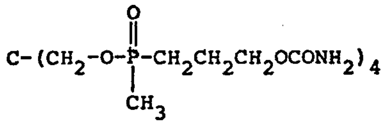

Beispiel 7

122 g Methanphosphonigsäuremonoisopropylester werden unter Rühren und unter Stickstoffatmosphäre auf 150°—160°C erhitzt. Nun wird während 1,25 Stunden ein Gemisch von 101 g Allylcarbamat und 1,5 g Di-tert.-butylperoxid eingetropft. 30 Minuten wird bei dieser Temperatur nachgerührt. Anschliessend wird gekühlt und bei 0,3 Torr bis zu einer Innentemperatur von 140°C andestilliert. Es destillieren 4,5 g ab. Als Rückstand verbleiben ca. 215 g 3-Carbamoyloxypropylmethylphosphinsäureisopropylester, $n_D^{20}$: 1,4728. Das entspricht einer Ausbeute von mehr als 95% d. Th.

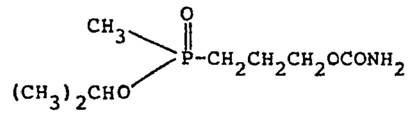

**Patentansprüche**

1. Verbindungen der Formel I

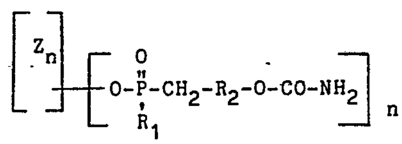 I

in der

$Z_n$ einen n-wertigen paraffinischen gesättigten Kohlenwasserstoffrest mit 1 bis 6 Kohlenstoffstomen,

$R_1$ eine gegebenenfalls verzweigte Alkylgruppe mit 1 bis 6 Kohlenstoffatomen, die durch ein Halogen-atom, vorzugsweise Cl, substituiert sein kann, oder einen Phenylrest.

$R_2$ eine gegebenenfalls verzweigte Alkylengruppe mit 2 bis 7 Kohlenstoffatomen bedeutet.

n eine Zahl von 1 bis 4 bedeutet oder deren Gemische.

2. Verbindungen der allgemeinen Formel I

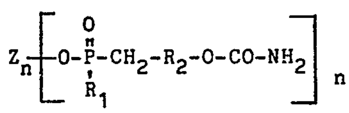 I

in der

$R_1$ Methyl oder Äthyl,

$R_2$ Äthylen oder die Gruppe

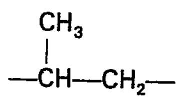

$Z_n$ einen n-wertigen aliphatischen gesättigten Kohlenwasserstoffrest mit 1 bis 6 C-Atomen, und

n eine Zahl von 1 bis 4 bedeutet.

3. Verfahren zur Herstellung der Verbindungen nach Anspruch 1, dadurch gekennzeichnet, dass man Phosphonite der allgemeinen Formel II

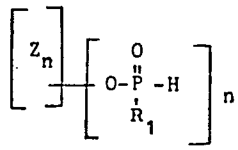

II

in der Z, $R_1$, n die Bedeutungen aus Anspruch 1 haben, mit olefinisch ungesättigten Carbamaten der Formel III

$$CH_2=R_3—O—CO—NH_2 \quad III$$

worin $R_3$ einen gegebenenfalls verzweigten Alkylenrest mit 2 bis 7 Kohlenstoffatomen bedeutet, in Gegenwart von Radikalbildnern umsetzt.

4. Verfahren nach Anspruch 3, dadurch gekennzeichnet, dass man die Umsetzung unter Inertgas durchführt.

5. Verwendung der Verbindungen nach Anspruch 1 zur Herstellung flammhemmender Ausrüstungen.

**Claims**

1. Compounds of the formula

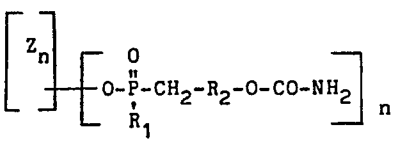

I

in which

$Z_n$ is an n-valent, saturated hydrocarbon radical having from 1 to 6 carbon atoms,

$R_1$ is an optionally branched alkyl group having from 1 to 6 carbon atoms, which alkyl group may be substituted by a halogen atom, preferably chlorine, or a phenyl radical,

$R_2$ is an optionally branched alkylene group having from 2 to 7 carbon atoms and

n is in the range of from 1 to 4; and the mixtures thereof.

2. A compound of the formula I

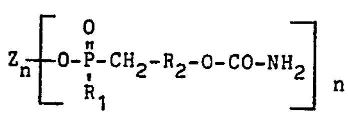

I

in which

$R_1$ is methyl or ethyl

$R_2$ is ethylene or

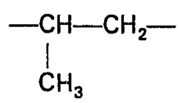

$Z_n$ is an n-valent aliphatic, saturated hydrocarbon radical having from 1 to 6 carbon atoms and n is in the range of from 1 to 4.

3. Process for preparing a compound as claimed in claim 1, wherein a phosphonite of the formula II

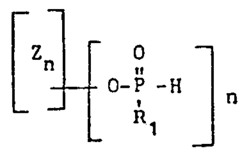

II.

in which Z, $R_1$ and n have the meaning as defined in claim 1 is reacted, in the presence of radical-forming agents, with an olefinically unsaturated carbamate of the formula III

$$CH_2 = CH_3—O—CO—NH_2 \quad III$$

in which $R_3$ is an optionally branched alkylene radical having from 2 to 7 carbon atoms.

4. The process as claimed in claim 3, wherein the reaction is carried out in an inert gas.

5. Method of using a compound as claimed in claim 1 for the preparation of a flame-retardant finish.

**Revendications**

1. Composés répondant à la formule générale I

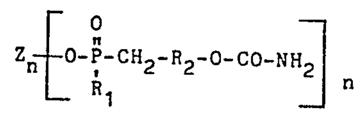

(I)

dans laquelle

$Z_n$ représente un radical hydrocarboné paraffinique saturé dont la valence est égale à n et qui contient de 1 à 6 atomes de carbone,

$R_1$ représente un radical alkyle éventuellement ramifié qui contient de 1 à 6 atomes de carbone et qui peut porter un atome d'halogène, de préférence de chlore, ou représente un radical phényle,

$R_2$ représente un radical alkylène, éventuellement ramifié, contenant de 2 à 7 atomes de carbone et

n désigne un nombre de 1 à 4,

ainsi que leurs mélanges.

2. Composés répondant à la formule générale I

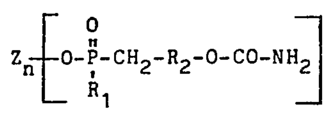

(I)

dans laquelle

$R_1$ représente un radical méthyle ou éthyle,

$R_2$ représente un radical éthylène ou un radical

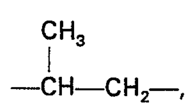

$Z_n$ représente un radical hydrocarboné aliphatique saturé dont la valence est égale à n et qui contient de 1 à 6 atomes de carbone et

n désigne un nombre de 1 à 4.

3. Procédé de préparation des composés selon la revendication 1, procédé caractérisé en ce qu'on fait reagir des phosphonites répondant a la formule générale II

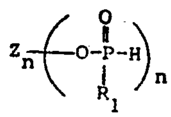

(II)

dans laquelle Z, $R_1$ et n ont significations données à la revendication 1, avec des carbamates éthyléniques répondant à la formule III

$$CH_2 = R_3—O—CO—NH_2 \quad \text{(III)}$$

dans laquelle $R_3$ représente un radical alkylène, éventuellement ramifié, contenant de 2 à 7 atomes de carbone, en présence de générateurs de radicaux.

4. Procédé selon la revendication 3, caractérisé en ce qu'on effectue la réaction sous un gas inerte.

5. Utilisation des composés selon la revendication 1 pour la réalisation d'apprêtages ignifugeants.